# EUROPEAN PATENT SPECIFICATION

(11) **EP 4 366 264 B1**
(45) Date of publication and mention of the grant of the patent: **14.10.2026**
(21) Application number: 22851863.5
(22) Date of filing: 18.07.2022
(51) Int. Cl.: H04L 45/02, H04L 45/00, H04L 12/66, H04L 61/00, H04L 61/103

(54) **COMMUNICATION METHOD BASED ON SEGMENT ROUTING OVER INTERNET PROTOCOL VERSION 6 (SRV6)**
KOMMUNIKATIONSVERFAHREN BASIEREND AUF SEGMENTROUTING ÜBER INTERNETPROTOKOLL VERSION 6 (SRV6)
PROCÉDÉ DE COMMUNICATION BASÉ SUR UN ROUTAGE DE SEGMENT SUR LA VERSION 6 DU PROTOCOLE INTERNET (SRV6)

(30) Priority: 31.07.2021 CN 202110876817; 16.09.2021 CN 202111088863
(43) Date of publication of application: 08.05.2024
(73) Proprietor: Huawei Technologies Co., Ltd., Longgang Shenzhen, Guangdong 518129 (CN)
(72) Inventor: REN, Huajun, Shenzhen, Guangdong 518129 (CN); ZHU, Tong, Shenzhen, Guangdong 518129 (CN); WANG, Haibo, Shenzhen, Guangdong 518129 (CN)
(74) Representative: MERH-IP Matias Erny Reichl Hoffmann Patentanwälte PartG mbB
(86) International application number: PCT/CN2022/106169
(87) International publication number: WO 2023/011149

(56) References cited:
- CN-A- 106 936 717
- CN-A- 108 880 970
- CN-A- 110 912 796
- CN-A- 111 786 884
- US-A1- 2020 213 155
- WANG ZTE CORPORATION Y: "Reduction of EVPN C-MAC Overload; draft-wang-bess-evpn-cmac-overload-reduction-01.txt", no. 1, 1 July 2020 (2020-07-01), pages 1 - 26, XP015140333, Retrieved from the Internet <URL:https://tools.ietf.org/html/draft-wang-bess-evpn-cmac-overload-reduction-01> [retrieved on 20200701]
- DAWRA G ET AL: "SRv6 BGP based Overlay services; draft-ietf-bess-srv6-services-01.txt", no. 1, 4 November 2019 (2019-11-04), pages 1 - 27, XP015136173, Retrieved from the Internet <URL:https://tools.ietf.org/html/draft-ietf-bess-srv6-services-01> [retrieved on 20191104]
- G. DAWRA, ED. LINKEDIN C. FILSFILS CISCO SYSTEMS R. RASZUK BLOOMBERG LP B. DECRAENE ORANGE S. ZHUANG HUAWEI TECHNOLOGIES J. RABADA: "SRv6 BGP based Overlay services; draft-ietf-bess-srv6-services-04.txt", SRV6 BGP BASED OVERLAY SERVICES; DRAFT-IETF-BESS-SRV6-SERVICES-04.TXT; INTERNET-DRAFT: BESS WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 04, 31 July 2020 (2020-07-31), Internet Society (ISOC) 4, rue des Falaises CH- 1205 Geneva, Switzerland , pages 1 - 28, XP015141025

## Description

### TECHNICAL FIELD

This application relates to the field of communication technologies, and in particular, to segment routing over internet protocol version 6 SRv6-based communication methods and a network device.

### BACKGROUND

In a conventional campus network, a virtual extensible local area network (virtual extensible LAN, VXLAN) technology of a network virtualization layer 3 (network virtualization layer 3, NVO3) is used to provide a layer 2 network for a campus.

A VXLAN is a network virtualization technology widely used in a large layer 2 network. A logical VXLAN tunnel is established between a source network device and a destination network device, where an encapsulation manner in which a media access control (media access control, MAC) address is encapsulated in a user datagram protocol (user datagram protocol, UDP) is used. To be specific, an original Ethernet packet sent by a virtual machine is completely encapsulated in a UDP packet, and then the UDP packet is encapsulated by using an Internet Protocol (Internet Protocol, IP) packet header of a physical network and an Ethernet packet header at an outer layer. In this way, an encapsulated packet is like a common IP packet, and may be forwarded through a routing network, so that the virtual machine completely gets rid of structural restrictions of a layer 2 network and a layer 3 network.

Currently, the VXLAN technology is generally used in the campus network and other local area networks. According to the research on the VXLAN technology, the applicant finds that the campus network using the VXLAN technology has difficulty in extending a new service. In addition, because packet forwarding in a network using the VXLAN technology is performed based on IP routing, the campus network using the VXLAN technology cannot perform user traffic optimization.

WANG ZTE CORPORATION Y:"Reduction of EVPN C-MAC Overload; draft-wang-bess-evpn-cmac-overload-reduction-01.txt", REDUCTION OF EVPN C-MAC OVERLOAD;DRAFT-WANG-BESS-EVPN-CMAC-OVERLOAD-REDUCTION-01-TXT; INTERNET-DRAFT: BESS WG, INTERNET ENGINEERING TASK FORCE, IETF; STANDARDWORKINGDRAFT, INTERNET SOCIETY (ISOC) 4,, no. 11 July 2020 (2020-07-01), pages 1-26 dicloses extentions to [RFC7432] where stated that when there are too many customer-MACs. C-MACs, the RRs and/or ASBRs will be overloaded by the RT-2 routes for these MACs.

### SUMMARY

First, to resolve a problem of user traffic optimization in a campus network, this application provides SRv6-based communication methods and a network device, as defined by the independent claims 1,9 and, respectively, 15. Further embodiments are defined by the dependent claims. In the method, segment routing over internet protocol version 6 SRv6 is deployed on a network side, to be specific, SRv6 (especially SRv6 BE) is deployed in a campus network to replace a VXLAN, for forwarding traffic. Therefore, SRv6 programmability can be fully used to implement user traffic optimization.

### BRIEF DESCRIPTION OF DRAWINGS

FIG. 1a is a schematic diagram of a centralized gateway;
FIG. 1b is a schematic diagram of a centralized gateway in a VXLAN architecture;
FIG. 2a is a schematic flowchart of an ARP request process;
FIG. 2b is a schematic flowchart of an ARP response process;
FIG. 3a is a schematic diagram of an embodiment of an SRv6-based communication method;
FIG. 3b is a schematic diagram of ARP packet exchange;
FIG. 3c is a schematic diagram of a structure of an ARP request packet or an ARP response packet;
FIG. 3d is a schematic diagram of a structure of an SRv6 BE packet;
FIG. 4 is a schematic diagram of an embodiment of an SRv6-based communication method 40 according to an embodiment of this application;
FIG. 5 is a schematic diagram of an embodiment of an SRv6-based communication method;
FIG. 6 is a schematic diagram of an extended community attribute;
FIG. 7 is a schematic diagram of an application scenario;
FIG. 8 is a schematic diagram of a structure of a network device 800 according to an embodiment of this application;
FIG. 9 is a schematic diagram of a structure of a network device 900 according to an embodiment of this application;
FIG. 10 is a schematic diagram of a structure of a network device 1000 according to an embodiment of this application;
FIG. 11 is a schematic diagram of a network system 1100 according to a not-claimed embodiment of this application; and
FIG. 12 is a schematic diagram of a network system 1200 according to a not-claimed embodiment of this application.

### DESCRIPTION OF EMBODIMENTS

The following describes embodiments of this application. It is clearly that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

First, some technical concepts in embodiments of this application are described.

Segment routing (segment routing, SR) is a protocol designed based on source routing to forward a data packet in a network. The SR divides a network path into segments and allocates segment identifiers (Segment IDs, SIDs) to the segments and network nodes. An SID list (SID List, also referred to as a label stack in SR-MPLS) may be obtained by sorting the SIDs in order. The SID list may indicate a forwarding path. In an SR technology, a headend adds a label stack to a data packet, and an intermediate node may forward the data packet to a next node based on the label stack until the data packet arrives at a destination node. For example, <SID1, SID2, SID3> is inserted into a packet header of a data packet, and the data packet (packet) is first forwarded to a node corresponding to the SID1, then forwarded to a node corresponding to the SID2, and then forwarded to a node corresponding to the SID3. SR-MPLS is short for segment routing multi-protocol label switching (segment routing multi-protocol label switching).

Segment routing over internet protocol version 6 (Internet Protocol Version 6, IPv6) (SRv6) refers to applying the SR technology to an IPv6 network. An IPv6 address (128 bits) is used as a representation of an SID. When forwarding a data packet, an SRv6-supported network device queries a local segment identifier table (local SID table) based on a destination address (destination address, DA) in the data packet. When the destination address in the data packet and any SID in the local segment identifier table comply with a longest match principle, an operation corresponding to a policy is performed based on the policy related to the SID in the local segment identifier table. For example, the data packet may be forwarded through an outbound interface corresponding to the SID. If the destination address in the data packet does not have a longest match with each SID in the local segment identifier table, an IPv6 forwarding table is then queried, and longest match forwarding is performed based on the IPv6 forwarding table.

An SR policy (SR policy) is a traffic engineering mechanism for SR. Generally, an SR policy includes a headend (headend), a color identifier (color), an endpoint (endpoint), and a segment identifier list indicating a forwarding path. The headend identifies a headend that executes the SR policy. The color is for associating the SR with service attributes such as a low delay and a high bandwidth, to summarize a service capability of the SR policy. The endpoint identifies a destination address of the SR policy. Generally, an SR policy is determined by using (headend, color, endpoint). For a same headend, an SR policy may also be determined by using (color, endpoint). An SR policy may include one or more segment identifier lists, to implement functions such as load balancing and multi-path backup. When forwarding a packet, a headend may determine, based on the SR policy, a segment identifier list corresponding to the packet, to determine a forwarding path for forwarding the packet, and encapsulate the segment identifier list in a packet to indicate a candidate path of the packet. The candidate path includes an explicit candidate path and a dynamic candidate path.

SRv6 best effort (SRv6 best effort, SRv6 BE):

In an SRv6 technology, only one service SID can indicate a packet to be forwarded in a best-effort mode in an IP network. The technology is referred to as SRv6 BE. A segment routing header (segment routing header, SRH) is not encapsulated in an SRv6 BE packet.

Virtual extensible local area network (virtual extensible LAN, VXLAN):

The VXLAN is a network virtualization technology widely used in a large layer 2 network. A logical VXLAN tunnel is established between a source network device and a destination network device, where an encapsulation manner in which a media access control (media access control, MAC) address is encapsulated in a user datagram protocol (user datagram protocol, UDP) is used. To be specific, an original Ethernet packet sent by a virtual machine is completely encapsulated in a UDP packet, and then the UDP packet is encapsulated by using an IP packet header of a physical network and an Ethernet packet header at an outer layer. In this way, an encapsulated packet is like a common IP packet, and may be forwarded through a routing network, so that the virtual machine completely gets rid of structural restrictions of a layer 2 network and a layer 3 network.

Layer 2 gateway (layer 2 gateway, L2GW) and layer 3 gateway (layer 3 gateway, L3GW):

A gateway that provides a network service for a layer 2 service is referred to as the layer 2 gateway, and a gateway that provides a network service for a layer 3 service is referred to as the layer 3 gateway. The layer 2 gateway refers to a service at a data link layer. The layer 3 gateway refers to a service at a network layer. The data link layer is a second layer of an open system interconnect (open system interconnect, OSI) model, and the network layer is a third layer of the OSID model.

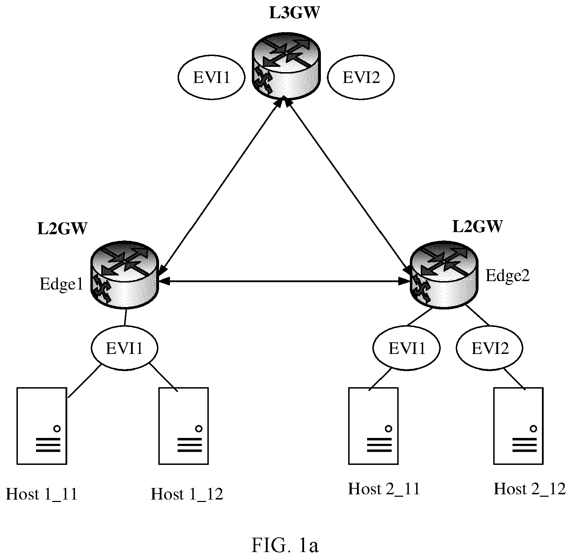

Refer to FIG. 1a. FIG. 1a is a schematic diagram of a centralized gateway. FIG. 1a includes a layer 3 gateway (L3GW) and two layer 2 gateways, where the layer 2 gateways includes a layer 2 gateway used as an edge (edge) 1 node and a layer 2 gateway used as an edge2 node, and the layer 3 gateway is used as a border (border) node. An Ethernet virtual private network instance (Ethernet virtual private network instance, EVI) 1 is configured on the edge1 node, and an EVI2 is provided on the edge2 node. An EVI1 and an EVI2 are provided in the layer 3 gateway. A plurality of EVIs that are isolated from each other may be configured on a set of physical devices. Each EVI is connected to one or more groups of user networks. A plurality of edge nodes form one or more cross-regional layer 2 networks. For example, a host 1_11, a host 1_12, and a host 2_11 form one cross-regional layer 2 network, and geographical locations of the hosts in the layer 2 network are different. The EVI1 includes a host 1_11 and a host 1_12, and the EVI2 includes a host 2_11 and a host 2_12.

The following describes the layer 2 gateway and the layer 3 gateway in a VXLAN scenario.

VXLAN gateways are divided into a layer 2 gateway and a layer 3 gateway. The VXLAN layer 2 gateway is used for a terminal to access a VXLAN network, and is also used for subnet communication in a same VXLAN network. The VXLAN layer 3 gateway is used for cross-subnet communication in a VXLAN network and access to an external network. The VXLAN layer 3 gateway may also be divided into a centralized gateway and a distributed gateway based on a different layer 3 gateway deployment manner.

Currently, a VXLAN technology based on a network virtualization layer 3 (network virtualization layer 3, NVO3) is used to provide a large layer 2 network for a campus network. A device running the NVO3 is referred to as a network virtualization edge device (network virtualization edge, NVE), which is located at a border of an overlay (overlay) network and implements layer 2 and layer 3 virtualization functions. The NVE performs identification by using VXLAN tunnel endpoints (VXLAN tunnel endpoints, VTEPs). A VXLAN tunnel may be determined by using two VTEPs. In other words, the VTEPs identify a start point and an end point of the VXLAN tunnel.

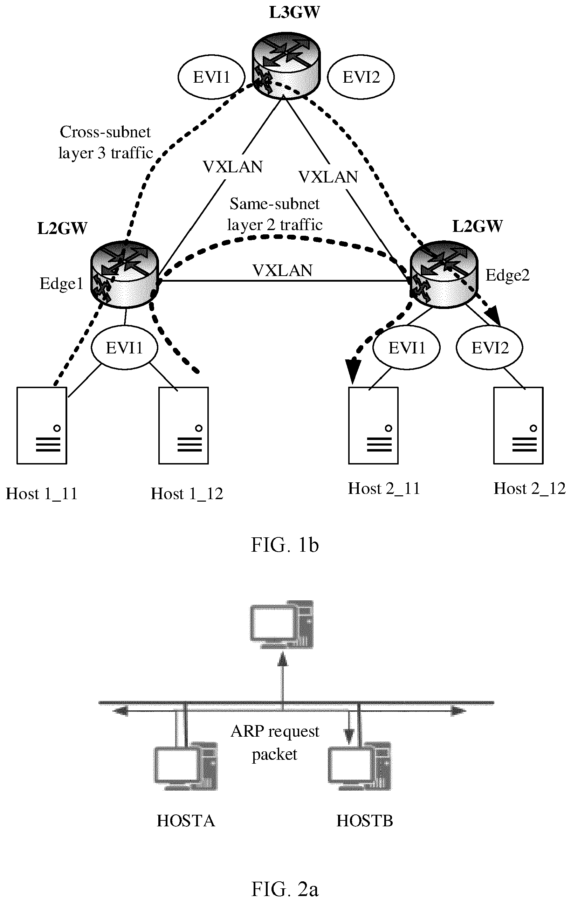

Based on FIG. 1a, refer to FIG. 1b. FIG. 1b is a schematic diagram of a centralized gateway in a VXLAN architecture. In FIG. 1b, a host 1_12 and a host 2_11 are in a same subnet. Traffic between the two hosts does not need to pass through an L3GW, and is directly forwarded at a layer 2 between L2GWs. The L2GWs advertise media access control (media access control, MAC) routes to the hosts through EVPNs. A host 1_11 and a host 2_21 are on different subnets. Traffic between the two hosts needs to be forwarded by the L3GW at a layer 3. Data sent by the L3GW to the L2GWs needs to be forwarded based on a guide of address resolution protocol (address resolution protocol, ARP) information of the hosts.

### ARP protocol:

The ARP protocol is a protocol used to resolve an Internet Protocol (Internet Protocol, IP) address into a MAC address. In a local area network, when a network device (or host) needs to send data to another network device (or host), the network device (or host) necessarily know a network layer address (namely, an IP address) of a peer device (or host). However, only the IP address is not enough because an IP data packet is necessarily encapsulated in frames before being sent through a physical network. Therefore, a sending party necessarily has a physical address (MAC address) of a receiving party. Therefore, a mapping from an IP address to a physical address is required. The ARP is a protocol that implements the function. Specifically, address resolution is implemented through an ARP request process and an ARP response process.

For the ARP request process, refer to FIG. 2a. FIG. 2a is a schematic flowchart of an ARP request process. HOST (host) A and HOSTB are on a same network segment. HOSTA needs to send information to HOSTB. First, HOSTA checks an ARP table of HOSTA, to determine whether an ARP entry corresponding to HOSTB exists. If a MAC address corresponding to HOSTB is found, HOSTA directly encapsulates an IP data packet in a frame by using the MAC address in the ARP table, and sends the data packet to HOSTB. If HOSTA does not find a corresponding MAC address in the ARP table, HOSTA caches the data packet, and then sends an ARP request packet in a broadcast manner. In the ARP request packet, an IP address of a sending end and a MAC address of the sending end are an IP address and the MAC address of HOSTA, a destination IP address is an IP address of HOSTB, and a destination MAC address is an all-0 MAC address. Because the ARP request packet is sent in the broadcast manner, all hosts on the network segment can receive the request, but only a requested host (HOSTB) processes the request.

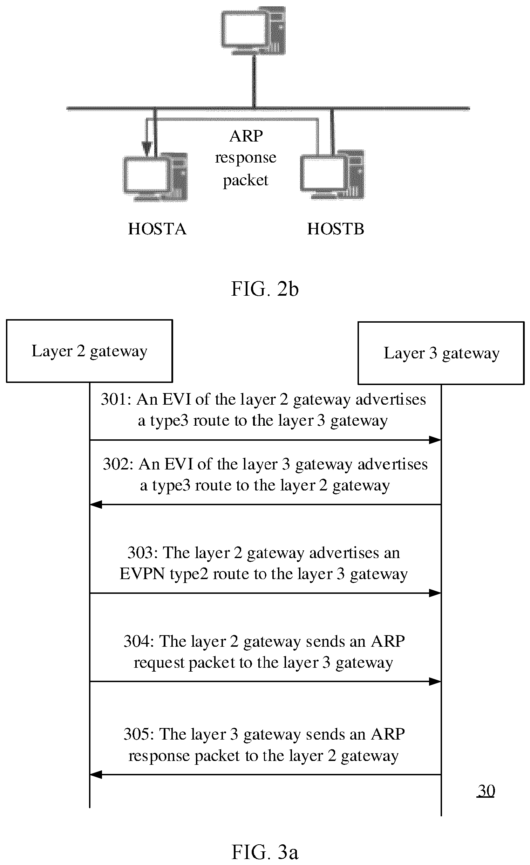

For the ARP response process, refer to FIG. 2b. FIG. 2b is a schematic flowchart of an ARP response process. HOSTB compares the IP address of HOSTB with the destination IP address in the ARP request packet. If the IP address and the destination IP address are the same, the following processing is performed: HOSTB saves the IP address and the MAC address of the sending end (namely, HOSTA) in the ARP request packet to an ARP table of HOSTB. Then, HOSTA sends an ARP response packet that carries a MAC address of HOSTB to HOSTA in a unicast manner. HOSTB sends the ARP response packet that includes the MAC address of HOSTB to HOSTA. After receiving the ARP response packet, HOSTA adds the MAC address of HOSTB to the ARP table of HOSTA for subsequent packet forwarding, encapsulates an IP data packet, and then sends the IP data packet.

Currently, the VXLAN technology is generally used in the campus network and other local area networks. The campus (campus) network generally refers to a campus network of a university or an intranet. Main characteristics thereof are as follows: Network devices (such as switches and routers), transmission media (such as optical fibers), and the like in the campus network are generally owned by an owner of the campus network. For example, the owner of the campus network is an enterprise user, a university, or a government organization.

According to the research on the VXLAN technology, the applicant finds that the campus network using the VXLAN technology has difficulty in extending a new service. In addition, because packet forwarding in a network using the VXLAN technology is performed based on IP routing, the campus network using the VXLAN technology cannot perform user traffic optimization.

Based on this, embodiments of this application propose that an SRv6 technology is applied to a local area network such as a campus network. The SRv6 technology is programmable. Therefore, a service extension capability of the campus network can be improved, and difficulty in implementing a new service for the campus network can be reduced. In addition, the campus network using the SRv6 technology can perform user traffic optimization, to fully utilize network bandwidth resources.

Refer to FIG. 3a. FIG. 3a is a schematic diagram of an embodiment of an SRv6-based communication method 30 according to an embodiment of this application. The SRv6-based communication method 30 may be applied to a network architecture shown in FIG. 1a. Specifically, communication exchange between a layer 2 gateway and a layer 3 gateway implement is implemented based on SRv6. An EVPN type3 route and an EVPN type2 route are for guiding packet forwarding between the layer 2 gateway and the layer 3 gateway. An exchanged packet between the layer 2 gateway and the layer 3 gateway carries an SRv6 packet header. By introducing an SRv6 technology, a campus network and other local area networks have a traffic engineering capability. The following provides specific descriptions.

301: An EVI of the layer 2 gateway advertises an EVPN type3 route to the layer 3 gateway.

In step 301, a scenario in which EVPN instances are separately deployed on the layer 2 gateway and the layer 3 gateway is used as an example for description. First, a border gateway protocol (border gateway protocol, BGP) neighbor relationship is deployed between the layer 2 gateway and the layer 3 gateway. The BGP neighbor relationship is also referred to as a BGP peer (BGP peer) relationship. A BGP peer relationship between A and B indicates that A is a BGP peer of B and B is a BGP peer of A. For a specific establishment process, refer to a convention of a request for comments (request for comments, RFC) 7432 protocol. Details are not described herein again.

One or more Ethernet virtual private network instances (EVPN instances, EVIs) are deployed (or applied for) in the layer 2 gateway. Each EVI includes one or more hosts, and each EVI is connected to one or more groups of user networks to form one or more cross-regional layer 2 networks. Similar to the layer 2 gateway, one or more EVIs are deployed (or applied for) in the layer 3 gateway.

The EVPN type3 route advertised (or advertised) by the EVI of the layer 2 gateway is also referred to as an inclusive multicast route (inclusive multicast route), and the EVPN type3 route is for guiding forwarding of broadcast&unknown-unicast&multicast (broadcast&unknown-unicast&multicast, BUM) traffic.

For example, fields of the EVPN type3 route advertised by the EVI of the layer 2 gateway are shown in Table 1.

**Table 1**

| Field name | Length (octet/octet) |
|---|---|
| Route distinguisher (Route Distinguisher, RD) | 8 octets (8 octets) |
| Ethernet tag identifier (Ethernet Tag ID) | 4 octets (4 octets) |
| IP address length (IP Address Length) | 1 octet (1 octet) |
| Originating router's IP address (Originating Router's IP Address) | 4 or 16 octets (4 or 16 octets) |

The Ethernet Tag ID and the Originating Router's IP Address are used as prefix indexes. A BGP prefix segment identifier (BGP Prefix Segment Identifier, BGP Prefix-SID) attribute carries an SID applied for by the EVI from the layer 2 gateway, where the SID is an end.dt2m-type SID. The end.dt2m-type SID has an endpoint with decapsulation and L2 table "Endpoint with decapsulation and L2 table". For example, the end.dt2m-type SID is used for a unicast or multicast (BUM) use case "Unicast and Multicast (BUM) use case" or Ethernet segment identifier (ESI) filtering "Ethernet Segment Identifier (ESI) filtering".

302: An EVI of the layer 3 gateway advertises an EVPN type3 route to the layer 2 gateway.

In step 302, the EVPN type3 route advertised by the layer 3 gateway is similar to the EVPN type3 route advertised by the layer 2 gateway in step 301. A BGP Prefix-SID attribute of the EVPN type3 route carries an SID applied for by the EVI from the layer 3 gateway, where the SID is an end.dt2m-type SID.

303: The layer 2 gateway advertises an EVPN type2 route to the layer 3 gateway.

In step 303, after learning a MAC address of a host on a forwarding plane, the layer 2 gateway advertises the MAC address to the layer 3 gateway by using the EVPN (EVPN) type2 route, where the host is a host in the EVI deployed in the layer 2 gateway. The EVPN type2 route is also referred to as a MAC/IP advertisement route (MAC/IP advertisement route), and is for advertising the MAC address or MAC+an address and an IP address of the host. After receiving the EVPN type2 route, the layer 3 gateway generates a MAC forwarding table. The EVPN type2 route is for guiding forwarding of unicast traffic.

For example, fields of the EVPN type2 route are shown in Table 2:

**Table 2**

| Field name | Length (octet/octet) |
|---|---|
| Route distinguisher (Route Distinguisher, RD) | 8 octets |
| Ethernet segment identifier (Ethernet segment identifier, ESI) | 10 octets |
| Ethernet tag identifier (Ethernet Tag ID) | 4 octets |
| MAC address length (MAC Address Length) | 1 octet |
| MAC address (MAC Address) | 6 octets |
| IP address length (IP Address Length) | 1 octet |
| IP address (IP Address) | 4 or 16 octets |
| Multi-protocol label switching label (MPLS Label) | 3 octets |
| Multi-protocol label switching label (MPLS Label) 2 | 0 or 3 octets |

In the EVPN type2 route, prefix indexes include: the Ethernet Tag ID, the MAC Address, and the IP Address. The ESI and the MPLS Label are used as route attributes. In the EVPN type2 route, a BGP Prefix-SID attribute carries an SID applied for by the EVI from the layer 2 gateway, where the SID is an end.dt2u-type SID. The end.dt2u-type SID has an endpoint with decapsulation and unicast MAC "Endpoint with decapsulation and unicast MAC". For example, the end.dt2u-type SID is used for an EVPN bridging unicast use case" EVPN Bridging Unicast use case".

After the layer 3 gateway receives the EVPN type2 route, reachability of unicast traffic between the layer 3 gateway and layer 2 gateway is realized.

It should be noted that, a sequence between steps 301 to 302 and step 303 is not limited herein. In other words, steps 301 to 302 may be performed before step 303, or step 303 may be performed before steps 301 to 302.

304: The layer 2 gateway sends an ARP request packet to the layer 3 gateway.

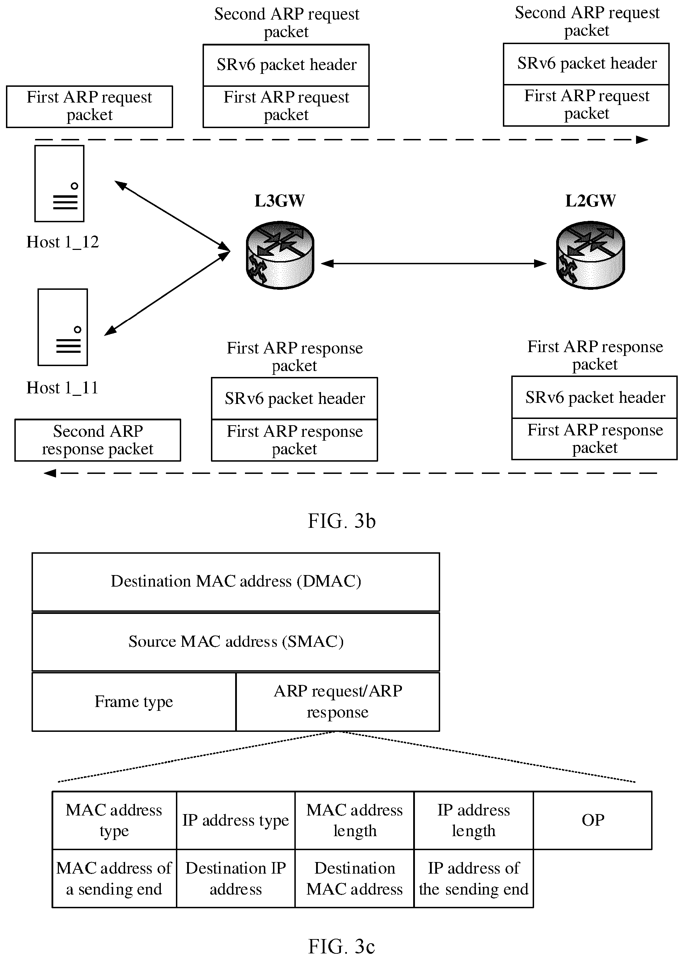

In step 304, the layer 2 gateway sends the APR request packet to the layer 3 gateway. For ease of understanding, refer to FIG. 3b. FIG. 3b is a schematic diagram of ARP packet exchange according to an embodiment of this application. An example in which hosts in the layer 2 gateway include a host 1_11 and a host 1_12 is used for description.

First, the host 1_11 generates an ARP request packet and sends the ARP request packet to the layer 2 gateway. In this embodiment of this application, for ease of differentiation, the ARP request packet sent by the host to the layer 2 gateway is referred to as a first ARP request packet.

For example, a structure of the first ARP request packet is shown in FIG. 3c. FIG. 3c is a schematic diagram of a structure of an ARP request packet or an ARP response packet according to an embodiment of this application. The ARP request packet includes the following fields: a destination MAC address (DMAC), a source MAC address (SMAC), a frame type, and an ARP request/ARP response. The ARP request/ARP response field includes the following fields: a destination MAC address, a source MAC address, a frame type, a MAC address type, an IP protocol type, a MAC address length, an IP address length, an OP, a MAC address of a sending end, an IP address of the sending end, a destination MAC address, and a destination IP address. The following provides specific descriptions.

The destination MAC address: 6 octets. When the packet is the ARP request packet, the destination MAC address is a broadcast MAC address (0xFF.FF.FF.FF.FF.FF).

The source MAC address: 6 octets.

The frame type: 2 octets. A value of the field is 0x0806.

The MAC address type: 2 octets, for defining a type of an address for running an ARP network. If a value is 1, it indicates an Ethernet address.

The IP protocol type: 2 octets, for defining a protocol type. If a value is 0x0800, it indicates an IP address.

The MAC address length: 1 octet, for defining a length of a physical address measured in octets. For the ARP request packet or the ARP response packet, a value is 6.

The IP address length: 1 octet, for defining a length of a logical measured in octets. For the ARP request packet or the ARP response packet, a value is 4.

The OP field: 2 octets, for defining a type of an ARP packet. If a value of the OP field is 1, the packet is the ARP request packet. If the value of the OP field is 2, the packet is the ARP response packet.

The MAC address of the sending end: 6 octets, for defining a MAC address of a sending station.

The IP address of the sending end: 4 octets, for defining an IP address of the sending station.

The destination MAC address: 6 octets. When the packet is the ARP request packet, a value of the field is 0.

The destination IP address: 4 octets.

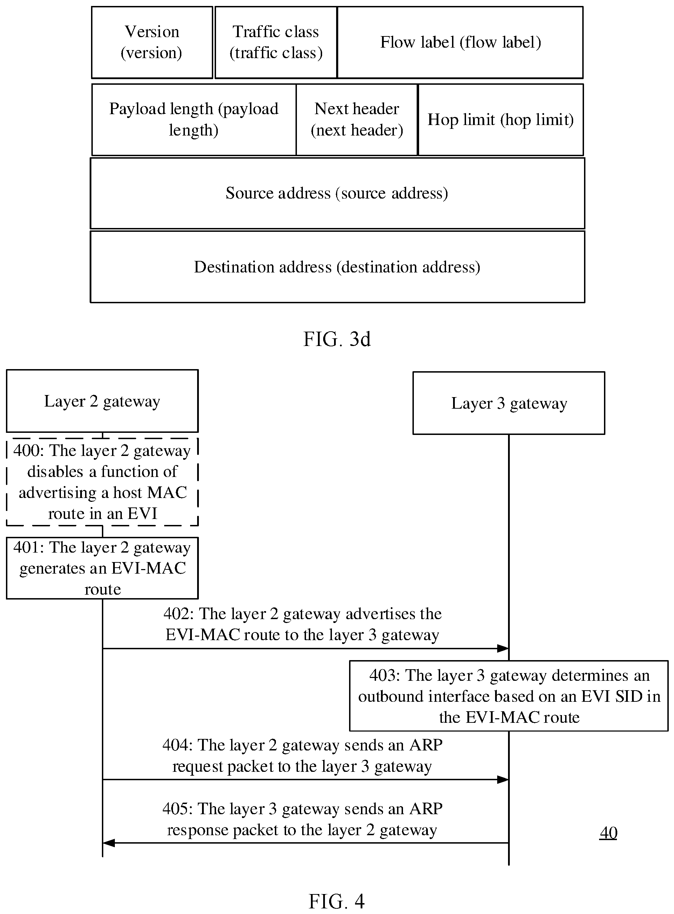

Then, after receiving the first ARP request packet from the host 1_11, the layer 2 gateway encapsulates an SEV6 packet header based on the first ARP request packet, and generates a second ARP request packet. A packet payload (payload) of the second ARP request packet is the first ARP request packet. The second ARP request packet may be understood as an SRv6 packet. For example, the following uses an example in which the second ARP request packet is an SRv6 BE packet for description. Refer to FIG. 3d. FIG. 3d is a schematic diagram of a structure of an SRv6 BE packet according to an embodiment of this application. The SEV6 BE packet includes the following fields: a version (version), a traffic class (traffic class), a flow label (flow label), a payload length (payload length), a next header (next header), a hop limit (hop limit), a source address (source address), and a destination address (destination address). The version (version) field indicates an IP version of the SEV6 BE packet, and a value of the field is 6. The traffic class (traffic class) field is similar to a type of service (TOS) field of an IPv4 packet header. The flow label (flow label) is for denoting a flow of an IPv6 data packet. A value of the next header (next header) field is 143. The hop limit (hop limit) field defines a hop limit that an IP data packet can pass through, and a value of the field decreases by 1 at each hop. The source address (source address) field is a source address of the IP data packet, and the destination address (destination address) is a destination address of the IP data packet.

A scenario shown in FIG. 3b is used as an example. A field value of a destination address field in the second ARP request packet is an end.dt2m-type SID advertised by the layer 3 gateway. A field value of a destination address field in a second ARP response packet is an end.dt2u-type SID advertised by the layer 2 gateway. The destination address field in the second ARP request packet may also be understood as a destination address field in an SRv6 packet header of the second ARP request packet. The destination address field in the second ARP response packet may also be understood as a destination address field in an SRv6 packet header of the second ARP response packet.

305: The layer 3 gateway sends an ARP response packet to the layer 2 gateway.

In step 305, after receiving the second ARP request packet from the layer 2 gateway, the layer 3 gateway removes the SRv6 packet header of the second ARP request packet, to obtain the first ARP request packet. Then, the layer 3 gateway sends the first ARP request packet to a control plane to perform ARP learning.

After the foregoing process is completed, the layer 3 gateway sends the ARP response packet to the layer 2 gateway. Based on the example in FIG. 3b, in this embodiment of this application, the ARP response packet sent by the layer 3 gateway to the layer 2 gateway is referred to as a first ARP response packet. The first ARP response packet is obtained after the layer 3 gateway encapsulates an SRv6 packet header based on the second ARP response packet, and the second ARP response packet is used as a payload of the first ARP response packet.

After receiving the first ARP response packet from the layer 3 gateway, the layer 2 gateway removes the SRv6 packet header, to obtain the second ARP response packet. Then, the layer 2 gateway sends the second ARP response packet to the host 1_11. After receiving the second ARP response packet, the host 1_11 performs ARP learning.

Through the foregoing process, a process of establishing packet transmission between the layer 2 gateway and the layer 3 gateway is completed. A data packet may be exchanged between the layer 2 gateway and the layer 3 gateway, where the data packet carries an SRv6 packet header. The SRv6 packet header of the data packet is similar to an SRv6 packet header of an ARP packet (including an ARP request packet and an ARP response packet). Details are not described herein again.

In a campus network to which the SRv6-based communication method 300 is applied, traffic optimization may be implemented by using a plurality of means. The following provides an example for description. It may be understood that a traffic optimization means is not limited in this embodiment of this application.

For example, in addition to the layer 2 gateway and the layer 3 gateway, the campus network further includes a controller. The layer 2 gateway and the layer 3 gateway detect a path delay by using a two-way active measurement protocol (Two-Way Active Measurement Protocol, TWAMP), and report a detection result (namely, the path delay) to the controller. The controller computes a path that meets a service level agreement (service level agreement, SLA) based on the detection result (namely, the path delay), and determines SRv6 path information of the path. The controller delivers the SRv6 path information of the path to the layer 2 gateway or the layer 3 gateway. The layer 2 gateway or the layer 3 gateway imports the SRv6 path information of the path to an SRv6 policy (policy), and forwards a packet based on the path computed by the controller, to meet a requirement for the SLA. The layer 2 gateway and/or the layer 3 gateway detect the path delay by using the TWAMP, and report the path delay to the controller by using a telemetry (Telemetry) technology. When the controller detects that a time domain of the path deteriorates, the controller recomputes a new path, to ensure that the new path meets the requirement for the SLA.

In this embodiment of this application, by using the foregoing method, the SRv6 technology can be successfully applied to the campus network and other local area networks that have the layer 2 gateway and the layer 3 gateway. In this way, the campus network can perform user traffic optimization, thereby improving network bandwidth utilization. In addition, the SRv6 technology is programmable. Therefore, difficulty in implementing a new service for the campus network can be effectively reduced. By introducing the SRv6 technology, the campus network has a traffic engineering capability. Therefore, a service of each gateway in the campus network can be effectively balanced, and a waste of a network bandwidth can be avoided. Traffic engineering means that a network node may establish a data forwarding path based on valid resources in a network, and has a capability of reserving a network bandwidth for key traffic. By dynamically monitoring network traffic and network element loads, a traffic management parameter, a routing parameter, a resource constraint parameter, and the like are adjusted in real time, to optimize network resource usage and avoid congestion caused by load imbalance.

Based on the embodiment shown in FIG. 3a, the applicant finds that when the SRv6 technology is used in a campus network, a layer 3 gateway (layer 3 gateway, L3GW) needs to store and manage media access control (media access control, MAC) addresses of hosts, and the hosts are hosts managed by all layer 2 gateways (layer 2 gateways, L2GWs) that have a communication connection to the layer 3 gateway. As a network capacity increases, the layer 3 gateway needs to store and manage more and more MAC addresses of hosts, increasing MAC routing pressure on the layer 3 gateway. Limited by device performance of the layer 3 gateway, a network capacity extension is affected.

Based on this, according to an SRv6-based communication method provided in an embodiment of this application, a layer 3 gateway no longer stores a MAC address of a host, and the layer 3 gateway may obtain an outbound interface by using a plurality of means. The outbound interface indicates a path for the layer 3 gateway to send a response packet to a layer 2 gateway. In this way, on a premise that a communication connection is established between the layer 3 gateway and the layer 2 gateway, MAC routing pressure on the layer 3 gateway is effectively reduced, and network capacity extension can be implemented at a low cost.

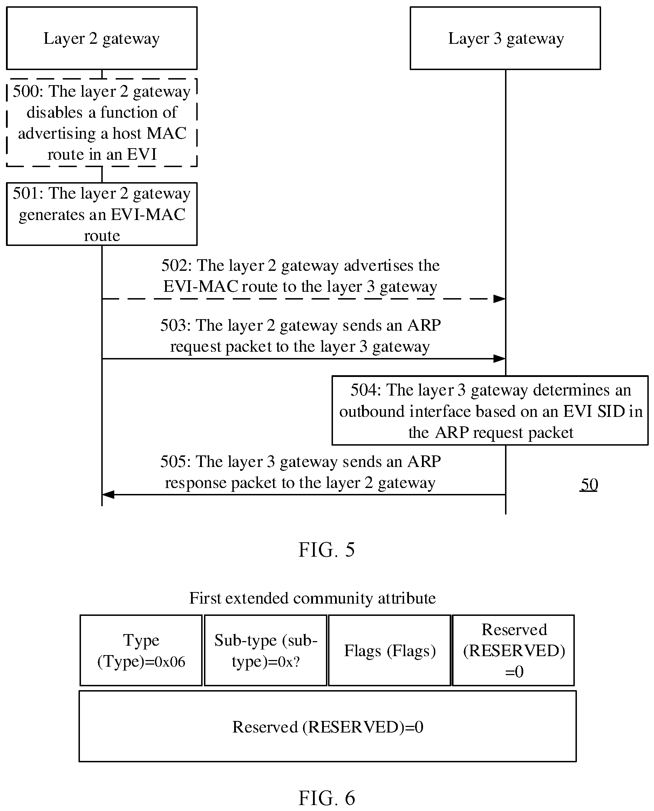

It may be understood that, an embodiment shown in FIG. 4 or FIG. 5 may support an SRv6 BE technology, or may support an SRv6 policy technology. This is not limited herein.

Specifically, the layer 3 gateway may obtain the outbound interface through a control plane, or the layer 3 gateway may obtain the outbound interface through a forwarding plane. The following separately provides descriptions with reference to the accompanying drawings. That the layer 3 gateway obtains the outbound interface through the control plane is first described.

Refer to FIG. 4. FIG. 4 is a schematic diagram of an embodiment of an SRv6-based communication method 40 according to an embodiment of this application. The SRv6-based communication method 40 provided in this embodiment of this application includes the following steps.

400: A layer 2 gateway disables a function of advertising a host MAC route in an EVI.

In step 400, the layer 2 gateway disables the function of advertising the host MAC route in the EVI to a layer 3 gateway, where a host is a host in an Ethernet virtual private network instance (EVPN instance, EVI) deployed (or configured) in the layer 2 gateway, for example, the host in the EVI.

In a default state, the layer 2 gateway advertises the host MAC route in the EVI to the layer 3 gateway. After the layer 2 gateway disables advertising the host MAC route in the EVI to the layer 3 gateway, a MAC route generated by the layer 2 gateway does not include a MAC address of a host, where a destination of the MAC route is the layer 3 gateway. By disabling the function of advertising the host MAC route in the EVI by the layer 2 gateway, the layer 3 gateway does not receive the MAC address of each host from the layer 2 gateway, thereby preventing the layer 3 gateway from saving the MAC address of the host, and reducing MAC routing pressure on the layer 3 gateway. It may be understood that, the layer 2 gateway may also be configured to no longer send the MAC address of the host to the layer 3 gateway. This is not limited herein.

It should be noted that, step 400 is an optional step. When step 400 is not performed, the layer 2 gateway may advertise a MAC route to the layer 3 gateway, where the MAC route includes a MAC address of each host in the EVI. In this case, after receiving the MAC route, the layer 3 gateway does not save the MAC address of each host in the EVI.

401: The layer 2 gateway generates an EVI-MAC route.

In step 401, first, an Ethernet virtual private network (Ethernet virtual private network, EVPN) neighbor is established between the layer 2 gateway and the layer 3 gateway by using a border gateway protocol (border gateway protocol, BGP). For a specific establishment process, refer to a convention of a request for comments (request for comments, RFC) 7432 protocol. Details are not described herein again.

In this embodiment of this application, an example in which the layer 2 gateway includes one Ethernet virtual private network instance is used, where the EVI includes one or more hosts. It may be understood that, the layer 2 gateway may alternatively include a plurality of EVIs. This is not limited herein.

After the EVPN neighbor is established between the layer 2 gateway and the layer 3 gateway, the layer 2 gateway generates a MAC route, where the MAC route includes a segment identifier (segment identifier, SID) applied for by the EVI from the layer 2 gateway. In this embodiment of this application, for ease of description, the SID applied for by the EVI is referred to as an EVI SID. The EVI SID is an end.dt2u-type SID. The MAC route is referred to as an EVI-MAC route.

In a possible implementation, a type of the EVI-MAC route is an EVPN type2 route.

It should be noted that, SIDs applied for by a same EVI in different gateway devices are different. For example, an EVI1 is used as an example for description. An SID applied for by the EVI1 from the layer 2 gateway is an EVI SID-1, and an SID applied for by the EVI1 from the layer 3 gateway is an EVI SID-2.

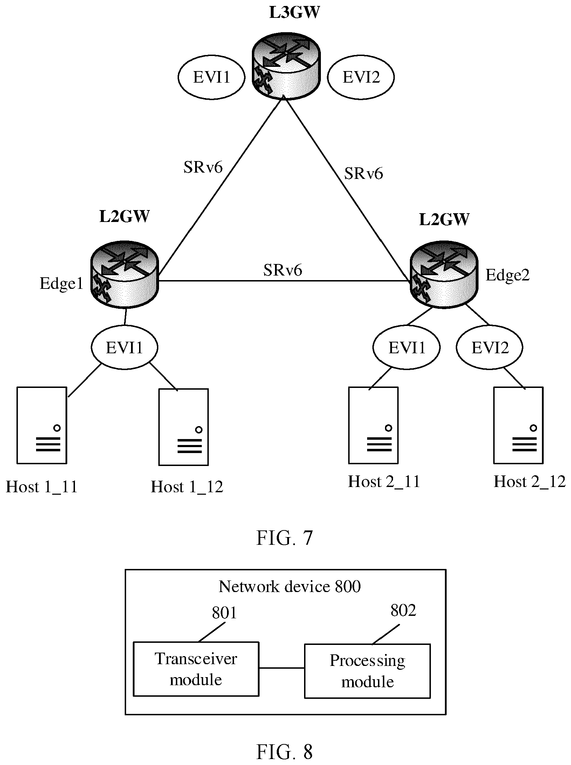

For another example, a scenario shown in FIG. 7 is used as an example. FIG. 7 is a schematic diagram of an application scenario according to an embodiment of this application. In FIG. 7, layer 2 gateways include an edge1 node and an edge2 node, where the edge1 node includes an EVI1, and the edge2 node includes an EVI1 and an EVI2. SRv6 tunnels are established between the layer 2 gateways and a layer 3 gateway, and an SRv6 tunnel is established between the edge1 node and the edge2 node. The layer 3 gateway includes an EVI1 and an EVI2. In this case, an SID applied for by the EVI1 from the edge1 node is different from an SID applied for by the EVI1 from the edge2 node.

A MAC address carried in the EVI-MAC route does not include the MAC address of each host in the EVI.

The MAC address carried in the EVI-MAC route may be a MAC address of the layer 2 gateway.

The MAC address carried in the EVI-MAC route may be an all-F MAC address, and the all-F MAC address is also referred to as a MAC address whose field value is all-F. For example, a field value of a MAC address of a route prefix in the MAC route is "0xffffffffffff'. It may be understood that, the MAC address carried in the EVI-MAC route may alternatively be another field value. This is not limited herein.

Optionally, the EVI-MAC route further includes indication information, and the indication information indicates the layer 3 gateway to avoid delivering the EVI-MAC route to a MAC forwarding table (forwarding table) of a forwarding plane after receiving the EVI-MAC route. The MAC forwarding table records a mapping relationship between a MAC address and an outbound interface.

Optionally, the EVI-MAC route may further include an extended community attribute (extended community), and the extended community attribute carries the foregoing indication information. In this case, after receiving the EVI-MAC route, the layer 3 gateway avoids delivering the EVI-MAC route to the MAC forwarding table of the forwarding plane based on the extended community attribute (where the extended community attribute carries the indication information) of the EVI-MAC route.

Optionally, the indication information may be the extended community attribute, to be specific, the extended community attribute indicates the layer 3 gateway to avoid delivering the EVI-MAC route to the MAC forwarding table of the forwarding plane.

For example, the extended community attribute is shown in FIG. 6. FIG. 6 is a schematic diagram of an extended community attribute according to an embodiment of this application. The extended community attribute includes: a type (Type), where a value of a type field is 0x06, to indicate that a type of the extended community attribute is an EVPN; a sub-type (sub-type), where a value of a sub-type field is 0x?, to identify that the type of the extended community attribute is an extended community attribute "DEFAULT-MAC Extended Community"; a flag (flags) field, which occupies space of 1 octet and is not used currently; and a reserved (reserved) field whose value is 0.

For example, the EVI-MAC route is shown in Table 3.

**Table 3**

| MAC Address | 0xffffffffffff |
|---|---|
| Prefix segment (prefix segment, prefix-SID) | EVI SID (where the SID is the end.dt2u-type SID) |
| Extended community (extended community) | "DEFAULT-MAC Extended Community" |

402: The layer 2 gateway advertises the EVI-MAC route to the layer 3 gateway.

In step 402, after the layer 2 gateway generates the EVI-MAC route, the layer 2 gateway advertises the EVI-MAC route to the layer 3 gateway. Specifically, the layer 2 gateway advertises the EVI-MAC route to the layer 3 gateway by using an IP packet.

403: The layer 3 gateway determines an outbound interface based on the EVI SID in the EVI-MAC route.

In step 403, after receiving the EVI-MAC route, the layer 3 gateway determines, based on the MAC address (where the MAC address is the MAC address of the layer 2 gateway or the all-F MAC address) carried in the EVI-MAC route, that the outbound interface needs to be looked up for based on the EVI SID carried in the EVI-MAC route. The outbound interface is used by the layer 3 gateway to send a packet whose destination address is the EVI SID to the layer 2 gateway.

It may be understood that, the layer 3 gateway may alternatively determine, based on the extended community attribute included in the EVI-MAC route, that the outbound interface needs to be looked up for based on the EVI SID carried in the EVI-MAC route. This is not limited herein.

The layer 3 gateway uses the EVI SID in the EVI-MAC route as a destination IP (destination IP, DIP) address, and looks up the routing table (routing table) on a forwarding plane to determine the outbound interface. The routing table is also referred to as a routing information table (routing information table) or a routing information base (routing information base, RIB).

Specifically, the routing table may be understood as one or more key-value (key-value) pairs. The layer 3 gateway uses the EVI SID as a key, and looks up the routing table for a corresponding value, where the value is the outbound interface.

In this embodiment of this application, the scenario shown in FIG. 7 is used as an example. A routing table in the layer 3 gateway is shown in Table 4.

**Table 4**

| SID | SID type | Outbound interface |
|---|---|---|
| SID applied for by the EVI1 from the edge1 node | end.dt2u | 0001 |
| SID applied for by the EVI1 from the edge2 node | end.dt2u | 0002 |
| SID applied for by the EVI2 from the edge2 node | end.dt2u | 0002 |

FIG. 7 is a schematic diagram of an application scenario according to an embodiment of this application. In FIG. 7, layer 2 gateways include an edge1 node and an edge2 node, where the edge1 node includes an EVI1, and the edge2 node includes an EVI1 and an EVI2. SRv6 tunnels are established between the layer 2 gateways and a layer 3 gateway, and an SRv6 tunnel is established between the edge1 node and the edge2 node. The layer 3 gateway includes an EVI1 and an EVI2.

The layer 3 gateway uses the EVI SID as a DIP, and looks up the routing table (as shown in Table 4) to determine that the outbound interface is "0001". For example, the layer 3 gateway determines a path of an ARP response packet based on the outbound interface.

404: The layer 2 gateway sends an ARP request packet to the layer 3 gateway.

In step 404, the layer 2 gateway receives the ARP request packet of a host in the EVI in the layer 2 gateway. In this embodiment of this application, for ease of differentiation, an ARP request packet sent by a host to the layer 2 gateway is referred to as a first ARP request packet. The scenario shown in FIG. 7 is used as an example. For example, the layer 2 gateway (the edge1 node) receives a first ARP request packet of a host 1_11. The layer 2 gateway encapsulates an SRv6 packet header based on the first ARP request packet from the host 1_11, to obtain an ARP request packet that carries the SRv6 packet header. In this embodiment of this application, the ARP request packet that carries the SRv6 packet header is referred to as a second ARP request packet. A SIP in the SRv6 packet header is an EVI SID.

A DIP of the second ARP request packet is an SID of the layer 3 gateway, the SID of the layer 3 gateway is advertised by the layer 3 gateway when an EVPN neighbor is established between the layer 2 gateway and the layer 3 gateway, and the SID of the layer 3 gateway is an end.dt2m-type SID.

Optionally, a source IP (source IP, SIP) address of the second ARP request packet is the EVI SID, the EVI SID is the SID applied for by the EVI from the layer 2 gateway, and the EVI SID is the end.dt2u-type SID. The first ARP request packet is used as a packet payload (payload) of the second ARP request packet.

405: The layer 3 gateway sends an ARP response packet to the layer 2 gateway.

In step 405, after receiving the second ARP request packet from the layer 2 gateway, the layer 3 gateway learns ARP information based on the packet payload (the first ARP request packet) of the second ARP request packet, where the ARP information indicates the layer 3 gateway to send the ARP response packet to the host in the layer 2 gateway. Specifically, the APR information may include a MAC address of the host and an IP address of the host.

The layer 3 gateway uses the SIP of the second ARP request packet as a DIP of the ARP response packet, where a SIP of the ARP response packet is an SID applied for by the EVI from the layer 3 gateway, and the SID applied for by the EVI from the layer 3 gateway is an end.dt2u-type SID.

The layer 3 gateway sends, based on the outbound interface determined in step 404, the ARP response packet to the layer 2 gateway through the SRv6 tunnel between the layer 3 gateway and the layer 2 gateway. After receiving the ARP response packet, the layer 2 gateway terminates the SRv6 tunnel between the layer 2 gateway and the layer 3 gateway, and forwards the ARP response packet to the host (for example, the host 1_11) in the EVI.

Specifically, the layer 3 gateway sends a second ARP response packet to the layer 2 gateway, where the second ARP response packet includes the SRv6 packet header and the first ARP response packet, and the first ARP response packet is used as a payload of the second ARP response packet. After receiving the second ARP response packet, the layer 2 gateway removes the SRv6 packet header, and forwards the first ARP response packet to the host in the EVI.

Through the foregoing process, the layer 3 gateway learns ARP information of a host in an EVI, a host in an EVI in the layer 2 gateway learns ARP information of the layer 3 gateway, so that reachability of layer 3 forwarding is realized between the host in the EVI in the layer 2 gateway and the layer 3 gateway.

In this embodiment of this application, the layer 2 gateway sends the EVI-MAC route to the layer 3 gateway, where the EVI-MAC route includes the EVI SID applied for by the EVI from the layer 2 gateway. The layer 3 gateway determines an outbound interface based on the EVI SID, where the outbound interface is used by the layer 3 gateway to send a packet whose destination address is the EVI SID to the layer 2 gateway. The layer 2 gateway no longer sends a MAC address of a host in the EVI from the layer 2 gateway to the layer 3 gateway. In this way, MAC routing pressure on the layer 3 gateway is effectively reduced, so that the layer 3 gateway can establish communication connections with more hosts, thereby effectively expanding a network capacity.

Then, that the layer 3 gateway obtains the outbound interface through the forwarding plane is introduced.

Refer to FIG. 5. FIG. 5 is a schematic diagram of an embodiment of an SRv6-based communication method 50 according to an embodiment of this application. The SRv6-based communication method 50 provided in this embodiment of this application includes the following steps.

500: A layer 2 gateway disables a function of advertising a host MAC route in an EVI.

Step 500 is consistent with step 400. Details are not described herein again.

501: The layer 2 gateway generates an EVI-MAC route.

502: The layer 2 gateway advertises the EVI-MAC route to a layer 3 gateway.

Steps 501 to 502 are similar to steps 401 to 402. Details are not described herein again.

It should be noted that, steps 501 to 502 are optional steps, in other words, steps 501 to 502 may not be performed. When steps 501 to 502 are not performed (to be specific, the layer 2 gateway does not send a MAC route to the layer 3 gateway), step 503 is performed after step 500.

503: The layer 2 gateway sends an ARP request packet to the layer 3 gateway.

Step 503 is similar to step 404. The layer 2 gateway receives the ARP request packet of a host in an EVI in the layer 2 gateway. In this embodiment of this application, for ease of differentiation, an ARP request packet sent by a host to the layer 2 gateway is referred to as a first ARP request packet. A scenario shown in FIG. 7 is used as an example. For example, a layer 2 gateway (the edge1 node) receives a first ARP request packet of a host 1_11. The layer 2 gateway encapsulates an SRv6 packet header based on the first ARP request packet from the host 1_11, to obtain an ARP request packet that carries the SRv6 packet header. In this embodiment of this application, the ARP request packet that carries the SRv6 packet header is referred to as a second ARP request packet.

A DIP of the second ARP request packet is an SID of a layer 3 gateway, the SID of the layer 3 gateway is advertised by the layer 3 gateway when an EVPN neighbor is established between the layer 2 gateway and the layer 3 gateway, and the SID of the layer 3 gateway is an end.dt2m-type SID. A SIP of the second ARP request packet is an EVI SID, the EVI SID is an SID applied for by the EVI from the layer 2 gateway, and the EVI SID is an end.dt2u-type SID. The first ARP request packet is used as a packet payload (payload) of the second ARP request packet.

504: The layer 3 gateway determines an outbound interface based on an EVI SID in the ARP request packet.

In step 504, the layer 3 gateway looks up a forwarding information table (forwarding information table) on a forwarding plane based on the EVI SID in the ARP request packet, to determine the outbound interface. A source of the forwarding information table is as follows: A control plane of the layer 3 gateway learns a routing table and then advertises the routing table to the forwarding plane. The forwarding information table is also referred to as a forwarding table or a forwarding information base (forwarding information base, FIB). The outbound interface is used by the layer 3 gateway to send a packet whose destination address is the EVI SID to the layer 2 gateway.

Specific content of the forwarding information table is similar to the routing table shown in Table 4. Specifically, the forwarding information table may be understood as one or more key-value (key-value) pairs. The layer 3 gateway uses the EVI SID as a key, and looks up the forwarding information table for a corresponding value, where the value is the outbound interface.

The layer 3 gateway uses the EVI SID as a DIP, and looks up the forwarding information table to determine that the outbound interface is "0001". For example, the layer 3 gateway determines a path of an ARP response packet based on the outbound interface.

505: The layer 3 gateway sends an ARP response packet to the layer 2 gateway.

Step 505 is similar to step 405. After receiving the second ARP request packet from the layer 2 gateway, the layer 3 gateway learns ARP information based on the packet payload (the first ARP request packet) of the second ARP request packet, where the ARP information indicates the layer 3 gateway to send the ARP response packet to the host in the layer 2 gateway. Specifically, the APR information may include a MAC address of the host and an IP address of the host.

The layer 3 gateway uses the SIP of the second ARP request packet as a DIP of the ARP response packet, where a SIP of the ARP response packet is an SID applied for by the EVI from the layer 3 gateway, and the SID applied for by the EVI from the layer 3 gateway is an end.dt2u-type SID.

The layer 3 gateway sends, based on the outbound interface determined in step 504, the ARP response packet to the layer 2 gateway through the SRv6 tunnel between the layer 3 gateway and the layer 2 gateway. After receiving the ARP response packet, the layer 2 gateway terminates the SRv6 tunnel between the layer 2 gateway and the layer 3 gateway, and forwards the ARP response packet to the host (for example, the host 1_11) in the EVI.

Specifically, the layer 3 gateway sends a second ARP response packet to the layer 2 gateway, where the second ARP response packet includes the SRv6 packet header and the first ARP response packet, and the first ARP response packet is used as a payload of the second ARP response packet. After receiving the second ARP response packet, the layer 2 gateway removes the SRv6 packet header, and forwards the first ARP response packet to the host in the EVI.

Through the foregoing process, the layer 3 gateway learns ARP information of a host in an EVI, a host in an EVI in the layer 2 gateway learns ARP information of the layer 3 gateway, so that reachability of layer 3 forwarding is realized between the host in the EVI in the layer 2 gateway and the layer 3 gateway.

In this embodiment of this application, the ARP request packet sent by the layer 2 gateway to the layer 3 gateway carries an EVI SID, where the EVI SID is an SID of an EVI. The layer 3 gateway determines an outbound interface based on the EVI SID, where the outbound interface is used by the layer 3 gateway to send a packet whose destination address is the EVI SID to the layer 2 gateway. The layer 2 gateway no longer sends a MAC address of a host in the EVI from the layer 2 gateway to the layer 3 gateway. In this way, MAC routing pressure on the layer 3 gateway is effectively reduced, so that the layer 3 gateway can establish communication connections with more hosts, thereby effectively expanding a network capacity.

The foregoing mainly describes the solutions provided in embodiments of this application from the perspective of the methods. It may be understood that, to implement the foregoing functions, the network device includes a corresponding hardware structure and/or software module for implementing each function. A person of ordinary skill in the art should easily be aware that, in combination with the examples described in embodiments disclosed in this specification, modules, algorithms and steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, functional modules of the network device may be obtained through division according to the foregoing method example. For example, the functional modules may be obtained through division corresponding to various functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

The following describes a network device in embodiments of this application. The network device described below has any function of the layer 2 gateway or the layer 3 gateway in the foregoing method embodiments.

FIG. 8 is a schematic diagram of a structure of a network device 800 according to an embodiment of this application. As shown in FIG. 8, the network device 800 includes: a transceiver module 801, configured to perform step 402, 404, or 405; and a processing module 802, configured to perform step 400, 401, or 403.

For another example, the transceiver module 801 is configured to perform step 502, 503, or 505; and the processing module 802 is configured to perform step 500, 501, or 504.

For another example, the transceiver module 801 and the processing module 802 are configured to perform steps 301 to 305.

The network device 800 may correspond to the layer 2 gateway and the layer 3 gateway in the foregoing method embodiments. Units and the foregoing other operations and/or functions in the network device 800 are respectively used to implement various steps and methods implemented by the layer 2 gateway, the layer 3 gateway, or the controller in the method embodiments. For specific details, refer to the foregoing method embodiments. For brevity, details are not described herein again.

When the network device 800 processes a packet, division of the foregoing functional modules is merely used as an example for description. During actual application, the foregoing functions may be allocated to different functional modules for implementation according to a requirement. That is, an internal structure of the network device 800 is divided into different functional modules, to implement all or some of the functions described above. In addition, the network device 800 provided in the foregoing embodiment belongs to a same concept as the method in the embodiment corresponding to FIG. 3a, FIG. 4, or FIG. 5. For a specific implementation process of the network device 800, refer to the foregoing method embodiment. Details are not described herein again.

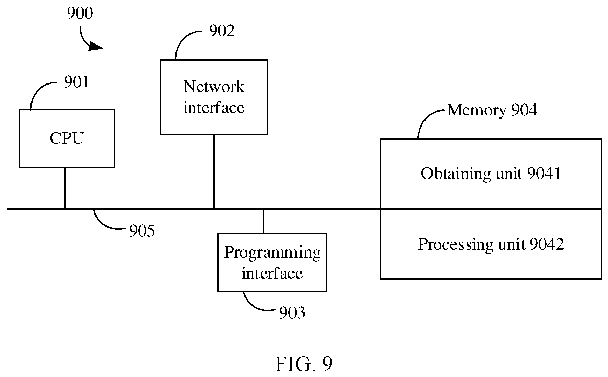

To implement the foregoing embodiments, this application further provides a network device. Refer to FIG. 9. FIG. 9 is a schematic diagram of a structure of a network device 900 according to an embodiment of this application.

Although the network device 900 shown in FIG. 9 shows some specific features, a person skilled in the art may be aware from embodiments of this application that, for brevity, FIG. 9 does not show various other features, to avoid confusing more related aspects of the implementations disclosed in embodiments of this application. For the purpose, as an example, in some implementations, the network device 900 includes one or more processing units (for example, a CPU) 901, a network interface 902, a programming interface 903, a memory 904, and one or more communication buses 905 configured to interconnect various components. In some other implementations, some functional components or units may be omitted or added to the network device 900 based on the foregoing example.

In some implementations, the network interface 902 is configured to connect to one or more other network devices/servers in a network system. In some implementations, the communication bus 905 includes a circuit that interconnects system components and controls communication between the system components. The memory 904 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 904 may also include a volatile memory. The volatile memory may be a random access memory (random access memory, RAM), and is used as an external cache.

In some implementations, the memory 904 or a non-transitory computer-readable storage medium of the memory 904 stores the following programs, modules, and data structures, or a subset thereof, for example, includes a transceiver unit (not shown in the figure), an obtaining unit 9041, and a processing unit 9042.

In a possible embodiment, the network device 900 may have any function of the layer 2 gateway or the layer 3 gateway in the method embodiment corresponding to FIG. 3a, FIG. 4, or FIG. 5.

It should be understood that, the network device 900 corresponds to the layer 2 gateway, the layer 3 gateway, or the controller in the foregoing method embodiments. Modules and the foregoing other operations and/or functions in the network device 900 are respectively used to implement various steps and methods implemented by the layer 2 gateway, the layer 3 gateway, or the controller in the foregoing method embodiments. For specific details, refer to the foregoing method embodiments corresponding to FIG. 3a, FIG. 4, or FIG. 5. For brevity, details are not described herein again.

It should be understood that, in this application, the network interface 902 on the network device 900 may complete a data receiving and sending operation, or the processor may invoke program code in the memory, and implement a function of the transceiver unit in cooperation with the network interface 902 when required.

In various implementations, the network device 900 is configured to perform the SRv6-based communication method provided in embodiments of this application, for example, perform the SRv6-based communication method corresponding to the embodiment shown in FIG. 3a, FIG. 4, or FIG. 5.

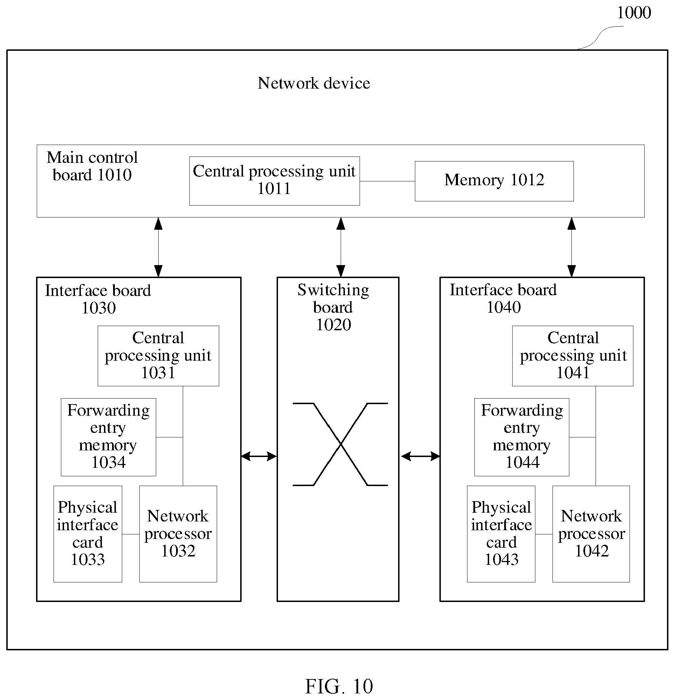

A specific structure of the network device in FIG. 9 in this application may be shown in FIG. 10.

FIG. 10 is a schematic diagram of a structure of a network device 1000 according to an embodiment of this application. The network device 1000 includes a main control board 1010 and an interface board 1030.

The main control board 1010 is also referred to as a main processing unit (main processing unit, MPU) or a route processor (route processor). The main control board 1010 is configured to control and manage components in the network device 1000, including functions of route calculation, device management, device maintenance, and protocol processing. The main control board 1010 includes a central processing unit 1011 and a memory 1012.

The interface board 1030 is also referred to as a line processing unit (line processing unit, LPU), a line card (line card), or a service board. The interface board 1030 is configured to provide various service interfaces and forward a data packet. The service interfaces include, but are not limited to, an Ethernet interface, a POS (Packet over SONET/SDH) interface, and the like. The interface board 1030 includes a central processing unit 1031, a network processor 1032, a forwarding entry memory 1034, and a physical interface card (physical interface card, PIC) 1033.

The central processing unit 1031 on the interface board 1030 is configured to control and manage the interface board 1030, and communicate with the central processing unit 1011 on the main control board 1010.

The network processor 1032 is configured to forward a packet. A form of the network processor 1032 may be a forwarding chip.

The physical interface card 1033 is configured to implement a physical layer interconnection function. Original traffic enters the interface board 1030 from the physical interface card 1033, and a processed packet is sent out from the physical interface card 1033. The physical interface card 1033 includes at least one physical interface. The physical interface is also referred to as a physical interface, and the physical interface may be a flexible Ethernet (Flexible Ethernet, FlexE) physical interface. The physical interface card 1033, also referred to as a subcard, may be mounted on the interface board 1030, and is responsible for converting an optical/electrical signal into a packet, performing validity check on the packet, and forwarding the packet to the network processor 1032 for processing. In some embodiments, the central processing unit 1031 on the interface board 1030 may also perform a function of the network processor 1032, for example, implement software forwarding based on a general-purpose CPU, so that the interface board 1030 does not need the network processor 1032.

Optionally, the network device 1000 includes a plurality of interface boards. For example, the network device 1000 further includes an interface board 1040, and the interface board 1040 includes a central processing unit 1041, a network processor 1042, a forwarding entry memory 1044, and a physical interface card 1043.

Optionally, the network device 1000 further includes a switching board 1020. The switching board 1020 may also be referred to as a switch fabric unit (switch fabric unit, SFU). When the network device includes a plurality of interface boards 1030, the switching board 1020 is configured to complete data exchange between the interface boards. For example, the interface board 1030 and the interface board 1040 may communicate with each other via the switching board 1020.

The main control board 1010 is coupled to the interface board. For example, the main control board 1010, the interface board 1030, the interface board 1040, and the switching board 1020 are connected through a system bus and/or a system backplane to implement interworking. In a possible implementation, an inter-process communication (inter-process communication, IPC) channel is established between the main control board 1010 and the interface board 1030, and the main control board 1010 communicates with the interface board 1030 through the IPC channel.

Logically, the network device 1000 includes a control plane and a forwarding plane. The control plane includes the main control board 1010 and the central processing unit 1031. The forwarding plane includes components that perform forwarding, such as the forwarding entry memory 1034, the physical interface card 1033, and the network processor 1032. The control plane performs functions such as advertising routing, generating a forwarding table, processing signaling and a protocol packet, and configuring and maintaining a device status. The control plane delivers the generated forwarding table to the forwarding plane. At the forwarding plane, by performing table lookup based on the forwarding table delivered by the control plane, the network processor 1032 forwards a packet received by the physical interface card 1033. The forwarding table delivered by the control plane may be stored in the forwarding entry memory 1034. In some embodiments, the control plane and the forwarding plane may be completely separated, and are not on a same device.

It should be understood that, the transceiver unit in the network device 900 may be equivalent to the physical interface card 1033 or the physical interface card 1043 in the network device 1000. The obtaining unit 9041 and the processing unit 9042 in the network device 900 may be equivalent to the central processing unit 1011 or the central processing unit 1031 in the network device 1000, or may be equivalent to program code or instructions stored in the memory 1012.

It should be understood that an operation on the interface board 1040 is consistent with an operation on the interface board 1030 in this embodiment of this application. For brevity, details are not described again. It should be understood that, the network device 1000 in this embodiment may correspond to the layer 2 gateway or the layer 3 gateway in the foregoing method embodiments. The main control board 1010, the interface board 1030, and/or the interface board 1040 in the network device 1000 may implement functions and/or various steps implemented by the layer 2 gateway or the layer 3 gateway in the foregoing method embodiments. For brevity, details are not described herein again.

It should be noted that, there may be one or more main control boards. When there are a plurality of main control boards, the main control boards may include an active main control board and a standby main control board. There may be one or more interface boards. A network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Optionally, a form of the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. Which architecture is specifically used depends on a specific networking deployment scenario, and is not uniquely limited herein.

In some possible embodiments, the first network device may be implemented as a virtualized device. The virtualization device may be a virtual machine (virtual machine, VM), a virtual router, or a virtual switch that runs a program used to send a packet. The virtualization device is deployed on a hardware device (for example, a physical server). For example, a first network device may be implemented based on a general-purpose physical server in combination with a network functions virtualization (network functions virtualization, NFV) technology.

It should be understood that, the network devices in the foregoing product forms have any function of the layer 2 gateway or the layer 3 gateway in the foregoing method embodiments. Details are not described herein again.

An embodiment of this application further provides a computer-readable storage medium, including instructions. When the instructions are run on a computer, the computer is enabled to control a network apparatus to perform any one of the implementations shown in the foregoing method embodiments.

An embodiment of this application further provides a computer program product. The computer program product includes computer program code. When the computer program code is run on a computer, the computer performs any implementation shown in the foregoing method embodiments.

Further, an embodiment of this application further provides a computer program product. When the computer program product is run on a network device, the network device is enabled to perform the method performed by the layer 2 gateway, the layer 3 gateway, or the controller in the method embodiment corresponding to FIG. 3a, FIG. 4, or FIG. 5.

Embodiments of this application further provide a chip system, including a processor and an interface circuit. The interface circuit is configured to receive instructions and transmit the instructions to the processor. The processor is configured to implement the method in any one of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented through the software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

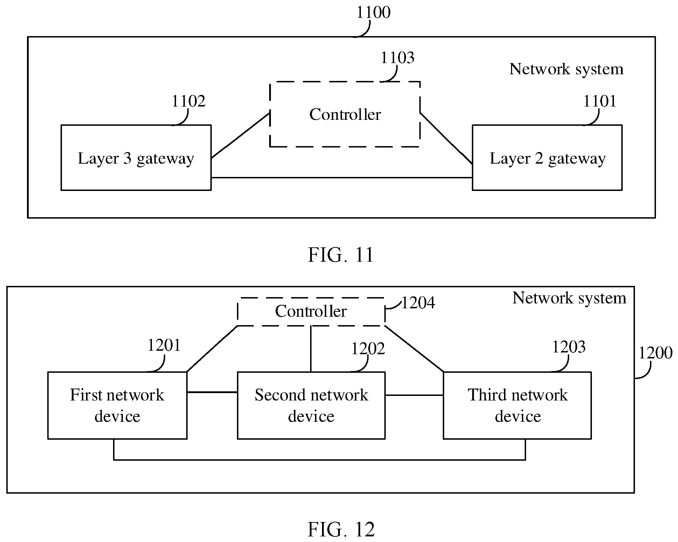

Refer to FIG. 11. FIG. 11 is a schematic diagram of a network system 1100 according to an embodiment of this application. The network system 1100 includes a layer 2 gateway 1101 and a layer 3 gateway 1102. The layer 2 gateway 1101 and the layer 3 gateway 1102, for example, physical devices such as a router, a switch, or a gateway, or may be virtual devices that support route advertisement and packet forwarding. Specific types of the layer 2 gateway 1101 and the layer 3 gateway 1102 are not limited in this embodiment.

Optionally, the network system 1100 further includes a controller 1103. The controller 1103 may be a server that manages the layer 2 gateway 1101 and the layer 3 gateway 1102. Optionally, the layer 2 gateway 1101 may be the network device 800, the network device 900, or the network device 1000. Optionally, the layer 3 gateway 1102 may be the network device 800, the network device 900, or the network device 1000. Optionally, the controller 1103 may be the network device 800, the network device 900, or the network device 1000.

Refer to FIG. 12. FIG. 12 is a schematic diagram of a network system 1200 according to an embodiment of this application. The network system 1200 includes a first network device 1201, a second network device 1202, and a third network device 1203. The first network device 1201, the second network device 1202, and the third network device 1203 may be, for example, physical devices such as a router, a switch, or a gateway, or may be virtual devices that support route advertisement and packet forwarding. Specific types of the first network device 1201, the second network device 1202, and the third network device 1203 are not limited in this embodiment.

For example, when the network system 1200 is applied to a scenario shown in FIG. 1a, the first network device 1201 may be an L3GW, the second network device 1202 may be an edge1 (L2GW), and the third network device 1203 may be an edge2 (L2GW).

Optionally, the network system 1200 shown in FIG. 12 further includes a controller 1204. The controller 1204 is not shown in a scenario shown in FIG. 1b.

In a possible implementation, the second network device 1202 and/or the third network device 1203 generate an Ethernet virtual private network instance EVI media access control EVI-MAC route, where the EVI-MAC route includes an Ethernet virtual private network instance segment identifier EVI SID, the EVI SID is an SRv6 SID applied for by an EVI from the second network device 1202 and/or the third network device 1203, and a MAC address carried in the EVI-MAC route does not include a MAC address of each host in the EVI;
the second network device 1202 and/or the third network device 1203 advertise the EVI-MAC route to the first network device 1201;
the first network device 1201 receives the Ethernet virtual private network instance-based media access control EVI-MAC route advertised by the second network device 1202 and/or the third network device 1203, where the EVI-MAC route includes the Ethernet virtual private network instance segment identifier EVI SID, the EVI SID is the SRv6 SID applied for by the EVI from the second network device 1202 and/or the third network device 1203, and the MAC address carried in the EVI-MAC route does not include the MAC address of each host in the EVI; and
the first network device 1201 obtains a correspondence between the EVI SID and an outbound interface based on the EVI SID, where the outbound interface is used by the first network device 1201 to send a packet whose destination address is the EVI SID to the second network device 1202 and/or the third network device 1203.

In another possible implementation, the second network device 1202 and/or the third network device 1203 send an address resolution protocol ARP request packet to the first network device 1201, where a source internet protocol SIP address of the ARP request packet is an Ethernet virtual private network instance segment identifier EVI SID, and the EVI SID is an SRv6 SID applied for by an Ethernet virtual private network instance EVI in the second network device 1202 and/or the third network device 1203 from the second network device 1202 and/or the third network device 1203;
the second network device 1202 and/or the third network device 1203 receive an ARP response packet sent by the first network device 1201, where a destination internet protocol DIP address of the ARP response packet is the EVI SID;
the first network device 1201 receives the address resolution protocol ARP request packet from the second network device 1202 and/or the third network device 1203, where the source internet protocol SIP address of the ARP request packet is the Ethernet virtual private network instance segment identifier EVI SID, and the EVI SID is the SRv6 SID applied for by the Ethernet virtual private network instance EVI from the second network device 1202 and/or the third network device 1203;
the first network device 1201 obtains a correspondence between the EVI SID and an outbound interface based on the EVI SID, where the outbound interface is used by the first network device 1201 to send a packet whose destination address is the EVI SID to the second network device 1202 and/or the third network device 1203; and
the first network device 1201 sends the ARP response packet to the second network device 1202 and/or the third network device 1203 through the outbound interface, where the destination internet protocol DIP address of the ARP response packet is the EVI SID.

The network devices in the foregoing product forms have any function of the layer 2 gateway or the layer 3 gateway in the foregoing method embodiments. Details are not described herein again.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

## Claims

1. A segment routing over internet protocol version 6 SRv6-based communication method, wherein the method is performed by a layer 2 gateway, and the method comprises:
generating (401) an Ethernet virtual private network instance EVI media access control EVI-MAC route, wherein the EVI-MAC route comprises an Ethernet virtual private network instance segment identifier EVI SID, the EVI SID is an SRv6 SID configured by the layer 2 gateway for an EVI , and a MAC address carried in the EVI-MAC route is a MAC address of the layer 2 gateway or an all-F MAC address; and
advertising (402) the EVI-MAC route to a layer 3 gateway.

2. The method according to claim 1, wherein the layer 2 gateway disables a function of advertising a host MAC route in the EVI to the layer 3 gateway.

3. The method according to claim 1 or 2, wherein the EVI-MAC route further comprises indication information, and the indication information indicates the layer 3 gateway to avoid delivering the EVI-MAC route to a MAC forwarding table of a forwarding plane.

4. The method according to claim 3, wherein the EVI-MAC route comprises an extended community attribute, and the extended community attribute carries the indication information.

5. The method according to any one of claims 1 to 4, wherein the method further comprises:
sending, by the layer 2 gateway, an address resolution protocol ARP request packet to the layer 3 gateway, wherein a source internet protocol SIP address of the ARP request packet is the EVI SID; and
receiving, by the layer 2 gateway, an ARP response packet sent by the layer 3 gateway, wherein a destination internet protocol DIP address of the ARP response packet is the EVI SID.

6. The method according to any one of claims 1 to 5, wherein the EVI SID is an end.dt2u-type SID.

7. The method according to any one of claims 1 to 6, wherein the layer 2 gateway and the layer 3 gateway are deployed in a campus network.

8. The method according to any one of claims 1 to 7, wherein the layer 2 gateway performs packet forwarding based on segment routing over IPv6 best effort SRv6 BE.

9. A segment routing over internet protocol version 6 SRv6-based communication method, wherein the method is performed by a layer 3 gateway, and the method comprises:
receiving (402) an Ethernet virtual private network instance-based media access control EVI-MAC route advertised by a layer 2 gateway, wherein the EVI-MAC route comprises an Ethernet virtual private network instance segment identifier EVI SID, the EVI SID is an SRv6 SID configured by the layer 2 gateway for an EVI , and a MAC address carried in the EVI-MAC route is a MAC address of the layer 2 gateway or an all-F MAC address; and
obtaining (403) a correspondence between the EVI SID and an outbound interface based on the EVI SID, wherein the outbound interface is used by the layer 3 gateway to send a packet whose destination address is the EVI SID to the layer 2 gateway.

10. The method according to claim 9, wherein the obtaining a correspondence between the EVI SID and an outbound interface based on the EVI SID comprises:
looking up a routing table based on the EVI SID to obtain the correspondence, wherein the routing table comprises the correspondence.

11. The method according to claim 9 or 10, wherein the EVI-MAC route comprises indication information, and the indication information indicates the layer 3 gateway to avoid delivering the EVI-MAC route to a MAC forwarding table of a forwarding plane; and the method further comprises:
avoiding, based on an indication of the indication information, delivering the EVI-MAC route to the MAC forwarding table of the forwarding plane.

12. The method according to claim 11, wherein the EVI-MAC route comprises an extended community attribute, and the extended community attribute carries the indication information.

13. The method according to any one of claims 9 to 12, wherein the method further comprises:
receiving an address resolution protocol ARP request packet from the layer 2 gateway, wherein a source internet protocol SIP address of the ARP request packet is the EVI SID;
determining, based on the correspondence between the EVI SID and the outbound interface, to send an ARP response packet to the layer 2 gateway through the outbound interface, wherein a destination internet protocol DIP address of the ARP response packet is the EVI SID; and
sending the ARP response packet to the layer 2 gateway through the outbound interface.

14. The method according to any one of claims 9 to 13, wherein the layer 3 gateway is a centralized gateway that performs packet forwarding based on segment routing over IPv6 best effort SRv6 BE.

15. A network device (800, 900, 1000, 1100), configured to implement the method in accordance with any one of claims 1 to 8, or the method in accordance with any one of claims 9 to 14.

## Patentansprüche

1. Segmentrouting-über-Internetprotokoll-Version-6(SRv6)-basiertes Kommunikationsverfahren, wobei das Verfahren durch ein Schicht-2-Gateway durchgeführt wird, und das Verfahren umfasst:
Erzeugen (401) einer Ethernet Virtual Private Network-Instanz(EVI)-Medienzugriffssteuerungs(EVI-MAC)-Route, wobei die EVI-MAC-Route eine Ethernet Virtual Private Network-Instanz-Segmentkennung (EVI-SID) umfasst, die EVI-SID eine SRv6-SID ist, die durch das Schicht-2-Gateway für eine EVI konfiguriert ist, und eine MAC-Adresse, die in der EVI-MAC-Route getragen wird, eine MAC-Adresse des Schicht-2-Gateways oder eine All-F-MAC-Adresse ist; und Bewerben (402) der EVI-MAC-Route an ein Schicht-3-Gateway.

2. Verfahren nach Anspruch 1, wobei das Schicht-2-Gateway eine Funktion des Bewerbens einer Host-MAC-Route in der EVI an das Schicht-3-Gateway deaktiviert.

3. Verfahren nach Anspruch 1 oder 2, wobei die EVI-MAC-Route ferner Anweisungsinformationen umfasst, und die Anweisungsinformationen das Schicht-3-Gateway anweisen, ein Ausgeben der EVI-MAC-Route an eine MAC-Weiterleitungstabelle einer Weiterleitungsebene zu vermeiden.

4. Verfahren nach Anspruch 3, wobei die EVI-MAC-Route ein erweitertes Community-Attribut umfasst, und das erweiterte Community-Attribut die Anweisungsinformationen trägt.

5. Verfahren nach einem der Ansprüche 1 bis 4, wobei das Verfahren ferner umfasst:
Senden, durch das Schicht-2-Gateway, eines Address Resolution Protocol(ARP)-Anfragepakets an das Schicht-3-Gateway, wobei eine Quell-Internetprotokoll(SIP)-Adresse des ARP-Anfragepakets die EVI-SID ist; und
Empfangen, durch das Schicht-2-Gateway, eines ARP-Antwortpakets, das durch das Schicht-3-Gateway gesendet wird, wobei eine Ziel-Internetprotokoll(DIP)-Adresse des ARP-Antwortpakets die EVI-SID ist.

6. Verfahren nach einem der Ansprüche 1 bis 5, wobei die EVI-SID eine end.dt2u-artige SID ist.

7. Verfahren nach einem der Ansprüche 1 bis 6, wobei das Schicht-2-Gateway und das Schicht-3-Gateway in einem Campus-Netzwerk eingesetzt sind.

8. Verfahren nach einem der Ansprüche 1 bis 7, wobei das Schicht-2-Gateway Paketweiterleitung basierend auf Segmentrouting-über-IPv6 Best Effort (SRv6 BE) durchführt.

9. Segmentrouting-über-Internetprotokoll-Version-6(SRv6)-basiertes Kommunikationsverfahren, wobei das Verfahren durch ein Schicht-3-Gateway durchgeführt wird, und das Verfahren umfasst:
Empfangen (402) einer Ethernet Virtual Private Network-Instanz-basierten Medienzugriffssteuerungs(EVI-MAC)-Route, die durch ein Schicht-2-Gateway beworben wird, wobei die EVI-MAC-Route eine Ethernet Virtual Private Network-Instanz-Segmentkennung (EVI-SID) umfasst, die EVI-SID eine SRv6-SID ist, die durch das Schicht-2-Gateway für eine EVI konfiguriert ist, und eine MAC-Adresse, die in der EVI-MAC-Route getragen wird, eine MAC-Adresse des Schicht-2-Gateways oder eine All-F-MAC-Adresse ist; und
Erhalten (403) einer Entsprechung zwischen der EVI-SID und einer ausgehenden Schnittstelle basierend auf der EVI-SID, wobei die ausgehende Schnittstelle durch das Schicht-3-Gateway verwendet wird, um ein Paket, dessen Zieladresse die EVI-SID ist, an das Schicht-2-Gateway zu senden.

10. Verfahren nach Anspruch 9, wobei das Erhalten einer Entsprechung zwischen der EVI-SID und einer ausgehenden Schnittstelle basierend auf der EVI-SID umfasst: Nachschlagen einer Routingtabelle basierend auf der EVI-SID, um die Entsprechung zu erhalten, wobei die Routingtabelle die Entsprechung umfasst.

11. Verfahren nach Anspruch 9 oder 10, wobei die EVI-MAC-Route Anweisungsinformationen umfasst, und die Anweisungsinformationen das Schicht-3-Gateway anweisen, das Ausgeben der EVI-MAC-Route an eine MAC-Weiterleitungstabelle einer Weiterleitungsebene zu vermeiden; und das Verfahren ferner umfasst:
Vermeiden, basierend auf einer Anweisung der Anweisungsinformationen, des Ausgebens der EVI-MAC-Route an die MAC-Weiterleitungstabelle der Weiterleitungsebene.

12. Verfahren nach Anspruch 11, wobei die EVI-MAC-Route ein erweitertes Community-Attribut umfasst, und das erweiterte Community-Attribut die Anweisungsinformationen trägt.

13. Verfahren nach einem der Ansprüche 9 bis 12, wobei das Verfahren ferner umfasst:
Empfangen eines Address Resolution Protocol(ARP)-Anfragepakets von dem Schicht-2-Gateway, wobei eine Quell-Internetprotokoll(SIP)-Adresse des ARP-Anfragepakets die EVI-SID ist;
Bestimmen, basierend auf der Entsprechung zwischen der EVI-SID und der ausgehenden Schnittstelle, ein ARP-Antwortpaket an das Schicht-2-Gateway über die ausgehende Schnittstelle zu senden, wobei eine Ziel-Internetprotokoll(DIP)-Adresse des ARP-Antwortpakets die EVI-SID ist; und
Senden des ARP-Antwortpakets an das Schicht-2-Gateway über die ausgehende Schnittstelle.

14. Verfahren nach einem der Ansprüche 9 bis 13, wobei das Schicht-3-Gateway ein zentralisiertes Gateway ist, das Paketweiterleitung basierend auf Segmentrouting-über-IPv6 Best Effort (SRv6 BE) durchführt.

15. Netzwerkvorrichtung (800, 900, 1000, 1100), die konfiguriert ist, um das Verfahren nach einem der Ansprüche 1 bis 8 oder das Verfahren nach einem der Ansprüche 9 bis 14 zu implementieren.

## Revendications

1. Procédé de communication basé sur un routage de segment sur un protocole Internet version 6 SRv6, dans lequel le procédé est réalisé par une passerelle de couche 2, et le procédé comprend :
la génération (401) d'une route de commande d'accès au support d'instance de réseau privé virtuel Ethernet EVI EVI-MAC, dans lequel la route EVI-MAC comprend un identifiant de segment d'instance de réseau privé virtuel Ethernet EVI SID, l'EVI SID est un SID Srv6 configuré par la passerelle de couche 2 pour une EVI, et une adresse MAC transportée dans la route EVI-MAC est une adresse MAC de la passerelle de couche 2 ou une adresse de toutes F-MAC ; et
l'annonce (402) de la route EVI-MAC vers une passerelle de couche 3.

2. Procédé selon la revendication 1, dans lequel la passerelle de couche 2 désactive une fonction d'annonce d'une route MAC hôte dans l'EVI vers la passerelle de couche 3.

3. Procédé selon la revendication 1 ou 2, dans lequel la route EVI-MAC comprend en outre des informations d'indication, et les informations d'indication indiquent à la passerelle de couche 3 d'éviter de délivrer la route EVI-MAC à une table de transfert MAC d'un plan de transfert.

4. Procédé selon la revendication 3, dans lequel la route EVI-MAC comprend un attribut de communauté étendu, et l'attribut de communauté étendu transporte les informations d'indication.

5. Procédé selon l'une quelconque des revendications 1 à 4, dans lequel le procédé comprend en outre :
l'envoi, par la passerelle de couche 2, d'un paquet de demandes de protocole de résolution d'adresse ARP à la passerelle de couche 3, dans lequel une adresse de protocole Internet source SIP du paquet de demandes ARP est l'EVI SID ; et
la réception, par la passerelle de couche 2, d'un paquet de réponses ARP envoyé par la passerelle de couche 3, dans lequel une adresse de protocole Internet de destination DIP du paquet de réponses ARP est l'EVI SID.

6. Procédé selon l'une quelconque des revendications 1 à 5, dans lequel l'EVI SID est une adresse de type end.dt2u.

7. Procédé selon l'une quelconque des revendications 1 à 6, dans lequel la passerelle de couche 2 et la passerelle de couche 3 sont déployées dans un réseau de campus.

8. Procédé selon l'une quelconque des revendications 1 à 7, dans lequel la passerelle de couche 2 réalise un transfert de paquets sur la base d'un routage de segment sur IPv6 en mode meilleur effort Srv6 BE.

9. Procédé de communication basé sur un routage de segment sur un protocole Internet version 6 SRv6, dans lequel le procédé est réalisé par une passerelle de couche 3, et le procédé comprend :
la réception (402) d'une route de commande d'accès au support basé sur une instance de réseau privé virtuel Ethernet EVI MAC annoncée par une passerelle de couche 2,
dans lequel la route EVI-MAC comprend un identifiant de segment d'instance de réseau privé virtuel Ethernet EVI SID, l'EVI SID est un SRv6 SID configuré par la passerelle de couche 2 pour un EVI, et une adresse MAC transportée dans la route EVI-MAC est une adresse MAC de la passerelle de couche 2 ou une adresse de toutes F-MAC ; et
l'obtention (403) d'une correspondance entre l'EVI SID et une interface sortante sur la base de l'EVI SID, dans lequel l'interface sortante est utilisée par la passerelle de couche 3 pour envoyer un paquet dont l'adresse de destination est l'EVI SID à la passerelle de couche 2.

10. Procédé selon la revendication 9, dans lequel l'obtention d'une correspondance entre l'EVI SID et une interface sortante sur la base de l'EVI SID comprend :
la recherche d'une table de routage sur la base de l'EVI SID pour obtenir la correspondance, dans lequel la table de routage comprend la correspondance.

11. Procédé selon la revendication 9 ou 10, dans lequel la route EVI-MAC comprend des informations d'indication, et les informations d'indication indiquent à la passerelle de couche 3 d'éviter de délivrer la route EVI-MAC à une table de transfert MAC d'un plan de transfert ; et le procédé comprend en outre :
le fait d'éviter, sur la base d'une indication des informations d'indication, de délivrer la route EVI-MAC à la table de transfert MAC du plan de transfert.

12. Procédé selon la revendication 11, dans lequel la route EVI-MAC comprend un attribut de communauté étendu, et l'attribut de communauté étendu transporte les informations d'indication.

13. Procédé selon l'une quelconque des revendications 9 à 12, dans lequel le procédé comprend en outre :
la réception d'un paquet de demandes de protocole de résolution d'adresse ARP en provenance de la passerelle de couche 2, dans lequel une adresse de protocole Internet source SIP du paquet de demandes ARP est l'EVI SID ;
le fait de déterminer, sur la base de la correspondance entre l'EVI SID et l'interface sortante, d'envoyer un paquet de réponses ARP à la passerelle de couche 2 par le biais de l'interface sortante, dans lequel une adresse de protocole Internet de destination DIP du paquet de réponses ARP est l'EVI SID ; et
l'envoi du paquet de réponses ARP à la passerelle de couche 2 par le biais de l'interface sortante.

14. Procédé selon l'une quelconque des revendications 9 à 13, dans lequel la passerelle de couche 3 est une passerelle centralisée qui réalise un transfert de paquets sur la base d'un routage de segment sur IPv6 en mode meilleur effort Srv6 BE.

15. Dispositif de réseau (800, 900, 1000, 1100), configuré pour mettre en œuvre le procédé selon l'une quelconque des revendications 1 à 8, ou le procédé selon l'une quelconque des revendications 9 à 14.
